# EUROPÄISCHE PATENTSCHRIFT

(11) **EP 3 421 257 B1**
(45) Veröffentlichungstag und Bekanntmachung des Hinweises auf die Patenterteilung: **13.07.2022**
(21) Anmeldenummer: 18166229.7
(22) Anmeldetag: 09.04.2018
(51) Int. Cl.: B60B 21/10, B60B 3/04

(54) **KOMBINATION AUS ZWEI FAHRZEUGRÄDERN FÜR NUTZFAHRZEUGREIFEN UND NUTZFAHRZEUG**
COMBINATION OF TWO VEHICLE WHEELS FOR COMMERCIAL VEHICLE TYRES AND COMMERCIAL VEHICLE
COMBINAISON DE DEUX ROUES DE VÉHICULE POUR PNEUS DE VÉHICULE UTILITAIRE ET VÉHICULE UTILITAIRE

(30) Priorität: 30.06.2017 DE 102017211127
(43) Veröffentlichungstag der Anmeldung: 02.01.2019
(73) Patentinhaber: Continental Reifen Deutschland GmbH, 30165 Hannover (DE)
(72) Erfinder: Kleffmann, Jens, 30453 Hannover (DE); Biabanaki, Seyedomidreza, 30419 Hannover (DE)
(74) Vertreter: Continental Corporation

(56) Entgegenhaltungen:
- EP-A1- 0 607 784
- DE-A1- 3 904 804
- US-A1- 2004 066 087

## Beschreibung

Die Erfindung betrifft eine Kombination aus zwei Fahrzeugrädern gleichen Typs mit montierten Nutzfahrzeugreifen zur Montage an den Achspositionen einer Achse eines Nutzfahrzeuges. Die Erfindung betrifft ferner ein Nutzfahrzeug mit einer derartigen Kombination.

Aus der US 2004/00066087 A1 ist ein Fahrzeugrad mit einer Felge bekannt, welche eine äußere und eine innere Felgenschulter aufweist. Der Außendurchmesser der Felge ist im Bereich der äußeren Fel genschulter größer als im Bereich der inneren Felgenschulter und das äußere Felgenhorn weist eine größere Felgenhornhöhe auf als das innere Felgenhorn. Der zugehörige Reifen weist eine der äußeren Felgenschulter zuzuordnende Seitenwand und eine der inneren Felgenschulter zuzuordnen Seitenwand auf, wobei die der äußeren Felgenschulter zuzuordnende Seitenwand vorzugsweise einen Felgenschutz aufweist.

Fahrzeugräder für Nutzfahrzeugreifen, die für Nutzfahrzeuge, beispielsweise für LKW-Zugmaschinen, LKW -Auflieger, LKW -Anhänger oder Busse, vorgesehen sind, weisen entweder Steilschulterfelgen oder Schrägschulterfelgen auf. Weit verbreitet sind 15°-Steilschulterfelgen oder 5°-Schrägschulterfelgen, welche von der ETRTO (European Tyre and Rim Technical Organisation) in deren Standards- Manuals seit vielen Jahren unverändert spezifiziert sind und die Montage und Demontage der Nutzfahrzeugreifen über beide Felgenhörner gestatten. Die Felgen können einteilig oder mehrteilig, asymmetrisch oder symmetrisch ausgeführt sein. Nutzfahrzeugreifen weisen üblicherweise an beiden Reifenseiten Wulstbereiche auf, die im Aufbau und der Geometrie identisch sind, wobei kleine Abweichungen in der Geometrie und bezüglich Materialstärken zwischen den beiden Wulstbereichen fertigungstechnisch bedingt auftreten können.

Nutzfahrzeugreifen sind ferner üblicherweise Reifen in Radialbauart mit Stahlkordgürteln, die meistens drei bis fünf Gürtellagen mit Stahlkorden als Festigkeitsträger enthalten. In jeder Gürtellage verlaufen die Stahlkorde parallel zueinander, in den einzelnen Gürtellagen jedoch bezüglich der Umfangsrichtung des jeweiligen Reifens unterschiedlich. Stahlkordgürtel sind bekannter Weise nicht symmetrisch aufgebaut, wobei nachfolgend zwei Beispiele für übliche Gürtelaufbauten angegeben sind, mit der 1. Gürtellage als radial innerste Gürtellage. Die Richtungsangaben rechtssteigend und linkssteigend beziehen sich auf die Neigung der Stahlkorde relativ zur Umfangsrichtung bei Draufsicht auf den Gürtel.

Beispiel 1:
1. Gürtellage: 50° rechtssteigend (übliche Winkel von 40° bis 75°)
2. Gürtellage: 18° rechtssteigend (Winkel von 12° bis 35°)
3. Gürtellage: 18° linkssteigend (Winkel zwischen 12° und 24°)
4. Gürtellage: 18° linkssteigend (Winkel zwischen 12° und 35°)

Zwischen der 2. und der 4. Gürtellage kann zusätzlich eine sogenannte 0° Gürtellage vorgesehen sein, wodurch sich ein fünflagiger Aufbau ergibt.

Beispiel 2:
1. Gürtellage: 18° rechtssteigend (Winkel zwischen 12° und 35°)
2. Gürtellage: 0° Lage
3. Gürtellage: 18° linkssteigend (Winkel zwischen 12° und 24°)
4. Gürtellage: 18° linkssteigend (Winkel zwischen 12° und 35°)

Der Senkung des Rollwiderstandes von Nutzfahrzeugreifen und damit der Reduktion des Kraftstoffverbrauches von Nutzfahrzeugen wird schon seit vielen Jahren besondere Aufmerksamkeit gewidmet. Das Hauptaugenmerk diesbezüglicher Maßnahmen und Entwicklungen liegt bislang bei den Nutzfahrzeugreifen selbst, beispielsweise dem konstruktiven Aufbau der Reifen oder der Zusammensetzung der Gummimischungen für Bauteile des Nutzfahrzeugreifens, insbesondere der Kautschukmischungen für Laufstreifen.

Der Erfindung liegt die Aufgabe zugrunde, einen gänzlich neuen Weg zur Reduktion des Rollwiderstandes und damit auch des Kraftstoffverbrauches in Betracht ziehen. Die aufzufindenden Maßnahmen sollen das System Nutzfahrzeugreifen - Fahrzeugrad betreffen, wobei herkömmlich ausgeführte Nutzfahrzeugreifen verwendbar sein sollen.

Gelöst wird die gestellte Aufgabe erfindungsgemäß durch eine Kombination aus zwei Fahrzeugrädern gleichen Typs mit montierten Nutzfahrzeugreifen zur Montage an den Achspositionen einer Achse eines Nutzfahrzeuges, wobei jedes Fahrzeugrad eine Felge und eine mit der Felge verbundene Radschüssel aufweist, wobei jede Felge radaußenseitig eine äußere und radinnenseitig eine innere Felgenschulter sowie radaußenseitig ein äußeres und radinnenseitig ein inneres Felgenhorn aufweist, wobei an der Felge des einen Fahrzeugrades das innere Felgenhorn eine um 5,0 mm bis 20,0 mm größere Felgenhornhöhe aufweist als das äußere Felgenhorn, wobei an der Felge des zweiten Fahrzeugrades das äußere Felgenhorn eine um 5,0 mm bis 20,0 mm größere Felgenhornhöhe aufweist als das innere Felgenhorn.

Das Nutzfahrzeug gemäß der Erfindung weist eine derartige Kombination auf.

Umfangreiche rechnerische Simulationen mittels der Finite-Element-Methode mit entsprechenden Reifen- und Felgenmodellen haben ergeben, dass sich mit den erfindungsgemäßen Maßnahmen eine Reduktion des Rollwiderstandes der Nutzfahrzeugreifen um bis zu 1,5 % erzielen lässt. Dadurch lässt sich auch der Kraftstoffverbrauch der Kraftfahrzeuge entsprechend senken. Konstruktive Änderungen der Reifen, insbesondere der Wulstbereiche sind nicht erforderlich, da die Höhendifferenzen der Felgenhörner der Felgen der Fahrzeugräder in einem Bereich sind, die, wie die Berechnungen ergeben haben, keinerlei Änderungen in den Wulstbereichen erfordern. Auf zumindest einer Achse des Nutzfahrzeuges befinden sich daher bezüglich der Ausgestaltung der Felgenhörner unterschiedliche Felgen, bei der einen Felge ist das radinnenseitig befindliche, innere Felgenhorn in einer größeren Höhe ausgeführt, bei der anderen Felge das radaußenseitig befindliche, äußere Felgenhorn. Die Felgen weisen lediglich eine vorgegebene Montagerichtung für die Nutzfahrzeugreifen auf, da die Montage über jene Felgenhornseite zu erfolgen hat, welche die geringere Felgenhornhöhe aufweist. Dabei sind die Felgen und damit auch die Fahrzeugräder vom gleichen Typ und ansonsten vorzugsweise übereinstimmend ausgestaltet, insbesondere indem die Felgenhörner mit der geringeren Höhe und die Felgenhörner mit der größeren Höhe jeweils übereinstimmend ausgeführt sind.

Bei einer besonders bevorzugten Ausführung sind die beiden Fahrzeugräder an der Achse des Nutzfahrzeuges derart montiert, dass, in Fahrtrichtung bei Vorwärtsfahrt betrachtet, das jeweils linksseitig befindliche Felgenhorn der Felgen der beiden Fahrzeugräder die größere Felgenhornhöhe aufweist. Die durchgeführten Berechnungen wurden durch eine Analyse einer etwaigen Auswirkung der Fahrbahnneigung - der Querneigung der Fahrbahn in eine Richtung - auf den Rollwiderstand ergänzt. Untersucht wurden Neigungen in der Größenordnung von 2,5 % in beide Richtungen und eine ebene Fahrbahn. Überraschenderweise hat sich gezeigt, dass sich in allen betrachteten Fällen - ebene Fahrbahn, positiv oder negativ geneigte Fahrbahn - mit Felgen mit in Fahrtrichtung betrachtet linksseitig höheren Felgenhörnern eine besonders deutliche Reduktion des Rollwiderstandes erzielen lässt. Es wird vermutet, dass dieser Effekt auf die nicht vorliegende Symmetrie der üblichen Gürtelkonstruktionen von Nutzfahrzeugreifen rückführbar sein könnte.

Bei einer bevorzugten Ausführung der Erfindung beträgt die Differenz der Felgenhornhöhen 5,0 mm bis 12,0 mm. Besonders bevorzugt ist eine Ausführung, bei der die Differenz der Felgenhornhöhen 8,0 mm bis 10,0 mm beträgt. Bei Fahrzeugrädern mit derart ausgeführten Felgen ist die erzielbare Rollwiderstandsreduktion am deutlichsten.

Bevorzugt ist ferner eine Ausführung, bei der die beiden Felgen übereinstimmende Felgenhornhöhen aufweisen, demnach weisen die Felgen an beiden Fahrzeugrädern gleich hohe niedrigere Felgenhörner und gleich hohe höhere Felgenhörner auf.

Bei einer bevorzugten Ausführung der erfindungsgemäßen Kombination sind beide Felgen Steilschulterfelgen, vorzugsweise solche, welche, jeweils abgesehen vom Felgenhorn mit der größeren Höhe, gemäß der ETRTO spezifizierte Steilschulterfelgen, beispielsweise 15°-Steilschulterfelgen, sind.

Bei einer alternativen Ausführung sind die beiden Felgen bei beiden Fahrzeugrädern Schrägschulterfelgen, vorzugsweise solche, welche, abgesehen vom Felgenhorn mit der größeren Höhe, gemäß der ETRTO spezifizierte Schrägschulterfelgen, beispielsweise 5°-Schrägschulterfelgen sind. Mit beiden Felgentypen lässt sich eine Reduktion des Rollwiderstandes erzielen, wobei Steilschulterfelgen diesbezüglich etwas vorteilhafter sind.

Beim Nutzfahrzeug wird an sämtlichen Achsen jeweils an der einen, für alle Achsen gleichen Achsposition ein Fahrzeugrad mit einer Felge montiert, bei welcher das innere Felgenhorn eine größere Felgenhornhöhe aufweist als das äußere Felgenhorn, wobei das an der anderen Achsposition jeweils angeordnete Fahrzeugrad eine Felge aufweist, deren äußeres Felgenhorn eine größere Felgenhornhöhe aufweist als das innere Felgenhorn. Eine derartige gleichartige Anordnung der Fahrzeugräder ist ebenfalls besonders vorteilhaft für eine Reduktion des Rollwiderstandes der Nutzfahrzeugreifen und damit einer Reduktion des Kraftstoffverbrauches des Nutzfahrzeuges.

Am Nutzfahrzeug sind zumindest an einer Achse, insbesondere an sämtlichen Achsen, Fahrzeugräder mit Felgen montiert, die Steilschulterfelgen sind, insbesondere solche Steilschulterfelgen, die, abgesehen vom Felgenhorn mit der größeren Höhe, gemäß der ETRTO spezifiziert sind. Bei einer alternativen Ausführung sind an zumindest einer Achse, insbesondere an sämtlichen Achsen, des Nutzfahrzeuges Fahrzeugräder mit Felgen montiert, die Schrägschulterfelgen sind, insbesondere solche Schrägschulterfelgen, die, abgesehen vom Felgenhorn mit der größeren Höhe, gemäß der ETRTO spezifiziert sind.

Weitere Merkmale, Vorteile und Einzelheiten der Erfindung werden nun anhand der Zeichnung, die Großteils schematisch Ausführungsbeispiele darstellt, näher beschrieben. Dabei zeigen
Fig. 1 und Fig. 2 Schnittansichten von Ausführungsvarianten eines erfindungsgemäßen Fahrzeugrades mit einer Steilschulterfelge,
Fig. 3 und Fig. 4 Schnittansichten von Ausführungsvarianten eines Fahrzeugrades mit einer Schrägschulterfelge und
Fig. 5 eine schematische Ansicht (Draufsicht) eines Nutzfahrzeuges mit drei Achsen.

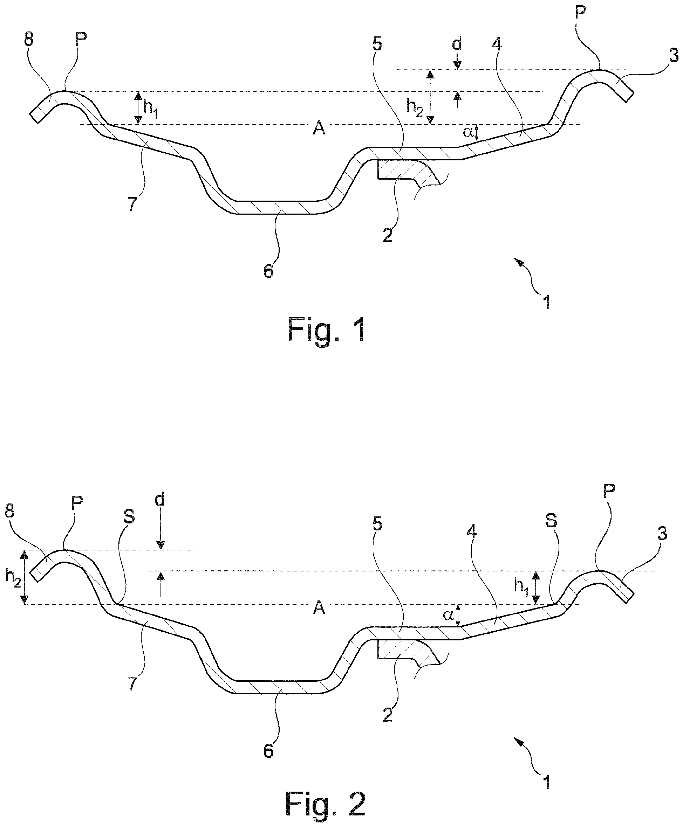

Fig. 1 bis Fig. 4 zeigen Teilquerschnitte von Fahrzeugrädern aus einer Felge und einer Radschüssel für Nutzfahrzeugreifen, insbesondere Reifen für LKW-Zugmaschinen, LKW - Auflieger, LKW - Anhänger oder für Busse.

Die Fahrzeugräder gemäß Fig. 1 und Fig. 2 weisen eine Steilschulterfelge 1 für schlauchlose Nutzfahrzeugreifen auf, wobei die Steilschulterfelge 1 von der Radaußenseite zur Radinnenseite gesehen als Felgenabschnitte ein äußeres Felgenhorn 3, eine äußere Felgenschulter 4, ein zylindrisches Übergangsteil 5 (Ledge), ein Tiefbett 6, eine innere Felgenschulter 7 und ein äußeres Felgenhorn 8 aufweist. Die Radschüssel 2 ist am zylindrischen Übergangsabschnitt 5 angeschweißt.

Die Steilschulterfelge 1 ist beispielsweise eine 15°-Steilschulterfelge, bei welcher die Felgenschultern 4 und 7 unter einem Winkel α von 15° ± 1° gegenüber der Horizontalen bzw. gegenüber der axialen Richtung geneigt sind. Weit verbreitet sind 15°-Steilschulterfelgen, welche gemäß den Vorgaben der ETRTO (European Tyre and Rim Technical Organisation) ausgeführt sind, beispielsweise gemäß der auf Seite 230 des ETRTO-Standards-Manuals 2003 im Abschnitt Rims Commercial-Vehicles spezifizierten 15 °-Steilschulterfelge.

An der Außenkontur der Steilschulterfelge 1 befinden sich an den äußeren Enden der Felgenschultern 4, 7 Schnittstellen S mit einer Horizontalen bzw. einer in axialer Richtung verlaufenden Geraden A. Von jeder Schnittstelle S wird im rechten Winkel zur Geraden A, demnach in radialer Richtung, bis zum höchsten, radial äußersten Punkt P jedes Felgenhornes 3, 8 jeweils die Felgenhornhöhe h₁, h₂ ermittelt. Bei der in Fig. 1 gezeigten Ausführung weist das äußere Felgenhorn 3 eine Höhe h₂ auf, die größer ist als die Höhe h₁ des inneren Felgenhorns 8. Bei der in Fig. 2 gezeigten Ausführung weist das innere Felgenhorn 8 eine Höhe h₂ auf, die größer ist als die Höhe h₁ des äußeren Felgenhornes 3. Die Höhendifferenz d zwischen h₁ und h₂ beträgt 5,0 mm bis 20,0 mm, vorzugsweise 5,0 mm bis 12,0 mm und besonders bevorzugt 8,0 mm bis 10,0 mm. Bei einer gemäß den Vorgaben der ETRTO spezifizierten 15°-Steilschulterfelge beträgt die Höhe h₁ 11,7 mm ± 0,5 mm.

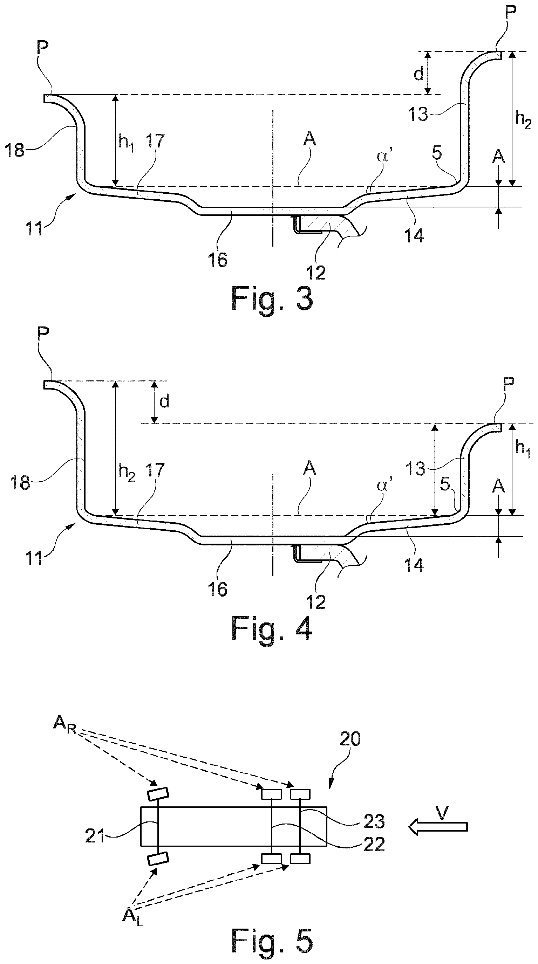

Die in Fig. 3 und Fig. 4 gezeigten Fahrzeugräder weisen eine Schrägschulterfelge 11 auf und eine lediglich angedeutete, an der Innenseite der Schrägschulterfelge 11 angeschweißte Radschüssel 12. Die Schrägschulterfelge 11 weist von der Radinnenseite zur Radaußenseite gesehen ein äußeres Felgenhorn 13, eine äußere Felgenschulter 14, ein lediglich seicht ausgeführtes Tiefbett 16, eine innere Felgenschulter 17 und ein äußeres Felgenhorn 18 auf. Die äußere und die innere Felgenschultern 14, 17 besitzen außenseitig jeweils Auflagelagefläche für die Wulstbereiche des Reifens. Die Schrägschulterfelge 11 ist beispielsweise eine solche, bei welcher die Felgenschultern 14 und 17 jeweils unter einem Winkel α' von 5° ± 1° gegenüber der Horizontalen bzw. der axialen Richtung geneigt sind und welche der auf Seite 234 des ETRTO-Standards-Manuals 2003 im Abschnitt Rims Commercial-Vehicles spezifizierten 5°-Schrägschulterfelge entspricht.

An der Außenkontur der Schrägschulterfelge 11 ist jeweils zwischen der äußeren Felgenschulter 14 und der inneren Felgenschulter 17 und dem jeweiligen Felgenhorn 13 bzw. 18 eine Übergangsrundung vorgesehen. An den äußeren Enden der Felgenschultern 14, 17 - beim jeweiligen Beginn der Übergangsrundungen - befinden sich Schnittstellen S mit einer Horizontalen bzw. einer in axialer Richtung verlaufenden Geraden A. Von jeder Schnittstelle S wird im rechten Winkel zur Geraden A, demnach in radialer Richtung, bis zum jeweils höchsten radial äußersten Punkt P der Felgenhörner 13, 18 die jeweilige Felgenhornhöhe h₁, h₂ ermittelt, wobei h₂ größer ist als h₁. Bei der in Fig. 3 gezeigten Variante weist das äußere Felgenhorn 13 die Höhe h₂ auf, das innere Felgenhorn 18 die Höhe h₁. Bei der in Fig. 4 gezeigten Ausführung weist das innere Felgenhorn 18 die Höhe h₂ auf, das äußere Felgenhorn 13 die Höhe h₁. Die Höhendifferenz d zwischen h₁ und h₂ beträgt auch bei der Schrägschulterfelge 11 5,0 mm bis 20,0 mm, vorzugsweise 5,0 mm bis 12,0 mm und besonders bevorzugt 8,0 mm bis 10,0 mm. Die Höhe h₁ variiert bei Schrägschulterfelgen in bekannter Weise je nach Felgendimension.

In Fig. 5 sind die äußeren Konturen eines Nutzfahrzeuges 20 in Draufsicht als Rechteck angedeutet. Das Nutzfahrzeug 20 kann beispielsweise eine Zugmaschine sein. Dargestellt sind drei Achsen 21, 22 und 23, wobei die Achse 21 die Vorderachse ist und die Achsen 22 und 23 die Hinterachsen sind. Die Fahrtrichtung des Nutzfahrzeuges 20 bei Vorwärtsfahrt ist mit dem Pfeil V gekennzeichnet. An jeder Achsposition befindet sich ein Fahrzeugrad mit einem auf diesem montierten Nutzfahrzeugreifen. Bezogen auf die Fahrtrichtung bei Vorwärtsfahrt weist jede Achse 21, 22 und 23 eine linksseitige Achsposition A_{L} und eine rechtsseitige Achsposition A_{R} auf. Zumindest an einer der Achsen 21, 22, 23, vorzugsweise an sämtlichen Achsen 21, 22 und 23, sind Fahrzeugräder gleichen Typs, daher entweder mit Steilschulterfelgen oder mit Schrägschulterfelgen, mitsamt Nutzfahrzeugreifen vorzugsweise derart montiert, dass das jeweils linksseitig befindliche Felgenhorn das Felgenhorn 3, 8 bzw. 13, 18 mit der größeren Felgenhornhöhe h₂ ist. An den linksseitigen Achspositionen A_{L} befinden sich daher Fahrzeugräder, deren radaußenseitig befindlichen äußere Felgenhörner 3, 13 die größere Felgenhornhöhe h₂ aufweisen, an den rechtsseitigen Achspositionen befinden sich Fahrzeugräder deren radinnenseitig befindlichen inneren Felgenhörner 8, 18 die größere Felgenhornhöhe h₂ besitzen.

Bei einer alternativen Anordnung sind die mit Nutzfahrzeugreifen versehenen Fahrzeugräder derart montiert, dass an den linksseitigen Achspositionen A_{L} jene Fahrzeugräder sind, deren radinnenseitig befindlichen inneren Felgenhörner 8, 18 die größere Felgenhornhöhe h₂ aufweisen, an den rechtsseitigen Achspositionen A_{R} jene Fahrzeugräder, deren äußere Felgenhörner 3, 13 die größere Felgenhornhöhe h₂ aufweisen. Die an sämtlichen Achspositionen A_{L}, A_{R} vorgesehenen Fahrzeugräder sind ansonsten vorzugsweise vom gleichen Typ und übereinstimmend ausgeführt, insbesondere auch bezüglich der Felgenhornhöhen h₁, h₂.

FEM-Berechnungen mit entsprechenden Reifen- und Felgenmodellen haben ergeben, dass insbesondere mit Fahrzeugrädern mit linksseitig erhöhten Felgenhörnern eine besonders deutliche Reduktion des Rollwiderstandes in der Größenordnung von bis zu 1,5 % erzielbar ist.

### Bezugszeichenliste

- 1: Steilschulterfelge
- 2: Radschüssel
- 3: äußeres Felgenhorn
- 4: äußere Felgenschulter
- 5: zylindrisches Übergangsteil
- 6: Tiefbett
- 7: innere Felgenschulter
- 8: inneres Felgenhorn
- 11: Schrägschulterfelge
- 12: Radschüssel
- 13: äußeres Felgenhorn
- 14: äußere Felgenschulter
- 16: Tiefbett
- 17: innere Felgenschulter
- 18: inneres Felgenhorn
- 20: Nutzfahrzeug
- 21, 22, 23: Achse
- α, α': Winkel
- A: Gerade
- A_{L}, A_{R}: Achsposition
- d: Höhendifferenz
- h₁, h₂: Felgenhornhöhe
- P: Punkt
- S: Schnittstelle
- V: Pfeil/Vorwärtsfahrtrichtung

## Patentansprüche

1. Kombination aus zwei Fahrzeugrädern gleichen Typs mit montierten Nutzfahrzeugreifen zur Montage an den Achspositionen (A_{L}, A_{R}) einer Achse (21, 22, 23) eines Nutzfahrzeuges (20), wobei jedes Fahrzeugrad eine Felge (1, 11) und eine mit der Felge (1, 11) verbundene Radschüssel (2, 12) aufweist, wobei jede Felge (1, 11) radaußenseitig eine äußere und radinnenseitig eine innere Felgenschulter (4, 7; 14, 17) sowie radaußenseitig ein äußeres und radinnenseitig ein inneres Felgenhorn (3, 8; 13, 18) aufweist,
wobei an der Felge (1, 11) des einen Fahrzeugrades das innere Felgenhorn (8, 18) eine um 5,0 mm bis 20,0 mm größere Felgenhornhöhe (h₂) aufweist als das äußere Felgenhorn (3, 13), wobei an der Felge (1, 11) des zweiten Fahrzeugrades das äußere Felgenhorn (3, 13) eine um 5,0 mm bis 20,0 mm größere Felgenhornhöhe (h₂) aufweist als das innere Felgenhorn (8, 18).

2. Kombination nach Anspruch 1, **dadurch gekennzeichnet, dass** die Differenz der Felgenhornhöhen (h₁, h₂) 5,0 mm bis 12,0 mm beträgt.

3. Kombination nach Anspruch 1 oder 2, **dadurch gekennzeichnet, dass** die Differenz der Felgenhornhöhen (h₁, h₂) 8,0 mm bis 10,0 mm beträgt.

4. Kombination nach einem der Ansprüche 1 bis 3, **dadurch gekennzeichnet, dass** die beiden Felgen (1, 11) übereinstimmende Felgenhornhöhen (h₁, h₂) aufweisen.

5. Kombination nach einem der Ansprüche 1 bis 4, **dadurch gekennzeichnet, dass** die beiden Felgen (1) Steilschulterfelgen sind.

6. Kombination nach einem der Ansprüche 1 bis 5, **dadurch gekennzeichnet, dass** die beiden Felgen (1), abgesehen vom Felgenhorn mit der größeren Höhe (h₂), gemäß der ETRTO spezifizierte Steilschulterfelgen sind.

7. Kombination nach einem der Ansprüche 1 bis 4, **dadurch gekennzeichnet, dass** die beiden Felgen (11) Schrägschulterfelgen sind.

8. Kombination nach einem der Ansprüche 1 bis 4 oder 7, **dadurch gekennzeichnet, dass** die beiden Felgen (11), abgesehen vom Felgenhorn mit der größeren Höhe (h₂), gemäß der ETRTO spezifizierte Schrägschulterfelgen sind.

9. Nutzfahrzeug (20) mit einer Kombination nach einem oder mehreren der Ansprüche 1 bis 8.

10. Nutzfahrzeug (20) nach Anspruch 9, **dadurch gekennzeichnet, dass** die beiden Fahrzeugräder an der Achse (21, 22, 23) des Nutzfahrzeuges (20) derart montiert sind, dass in Fahrtrichtung bei Vorwärtsfahrt das jeweils linksseitig befindliche Felgenhorn der Felge (1, 11) die größere Felgenhornhöhe (h₂) aufweist.

11. Nutzfahrzeug (20) nach Anspruch 9 oder 10, **dadurch gekennzeichnet, dass** an sämtlichen Achsen (21, 22, 23) jeweils an der einen für alle Achsen gleichen Achsposition (A_{L}, A_{R}) das Fahrzeugrad (h₂) eine Felge (1, 11) aufweist, deren inneres Felgenhorn (8, 18) eine größere Felgenhornhöhe aufweist als das äußere Felgenhorn (3, 13), wobei das an der anderen Achsposition angeordnete Fahrzeugrad eine Felge (1, 11) aufweist, deren äußeres Felgenhorn (3, 13) eine größere Felgenhornhöhe (h₂) aufweist als das innere Felgenhorn (8, 18).

12. Nutzfahrzeug (20) nach einem der Ansprüche 9 bis 11, **dadurch gekennzeichnet, dass** die Differenz der Felgenhornhöhen (h₁, h₂) der Felgenhörner der Felgen (1, 11) der an einer Achse (21, 22, 23) angeordneten Fahrzeugräder 5,0 mm bis 12,0 mm beträgt.

13. Nutzfahrzeug (20) nach einem der Ansprüche 9 bis 12, **dadurch gekennzeichnet, dass** die Differenz der Felgenhornhöhen (h₁, h₂) der Felgenhörner der Felgen (1, 11) der an einer Achse (21, 22, 23) angeordneten Fahrzeugräder 8,0 mm bis 10,0 mm beträgt.

14. Nutzfahrzeug (20) nach einem der Ansprüche 9 bis 13, **dadurch gekennzeichnet, dass** die an einer Achse (21, 22, 23) montierten Fahrzeugräder Felgen (1, 11) besitzen, deren Felgenhörner übereinstimmende Felgenhornhöhen (h₁, h₂) aufweisen.

15. Nutzfahrzeug (20) nach einem der Ansprüche 9 bis 14, **dadurch gekennzeichnet, dass** die an einer Achse (21, 22, 23) montierten Fahrzeugräder Felgen (1, 11) besitzen, die Steilschulterfelgen sind.

16. Nutzfahrzeug (20) nach einem der Ansprüche 9 bis 15, **dadurch gekennzeichnet, dass** die an einer Achse (21, 22, 23) montierten Fahrzeugräder Felgen (1, 11) besitzen, die, abgesehen vom Felgenhorn mit der größeren Höhe (h₂), gemäß der ETRTO spezifizierte Steilschulterfelgen sind.

17. Nutzfahrzeug (20) nach einem der Ansprüche 9 bis 14, **dadurch gekennzeichnet, dass** die an einer Achse (21, 22, 23) montierten Fahrzeugräder Felgen (11) besitzen, die Schrägschulterfelgen sind.

18. Nutzfahrzeug (20) nach einem der Ansprüche 9 bis 14 oder 17, **dadurch gekennzeichnet, dass** die an einer Achse (21, 22, 23) montierten Fahrzeugräder Felgen (11) besitzen, die, abgesehen vom Felgenhorn mit der größeren Höhe (h₁, h₂), gemäß der ETRTO spezifizierte Schrägschulterfelgen sind.

## Claims

1. Combination of two vehicle wheels of the same type with mounted utility vehicle tyres for mounting at the axle positions (A_{L}, A_{R}) of an axle (21, 22, 23) of a utility vehicle (20), each vehicle wheel having a rim (1, 11) and a wheel disc (2, 12) which is connected to the rim (1, 11), each rim (1, 11) having an outer rim shoulder on the wheel outer side and an inner one (4, 7; 14, 17) on the wheel inner side, and having an outer rim flange on the wheel outer side and an inner one (3, 8; 13, 18) on the wheel inner side,
the inner rim flange (8, 18) having, on the rim (1, 11) of the one vehicle wheel, a rim flange height (h₂) which is greater by from 5.0 mm to 20.0 mm than the outer rim flange (3, 13), the outer rim flange (3, 13) having, on the rim (1, 11) of the second vehicle wheel, a rim flange height (h₂) which is greater by from 5.0 mm to 20.0 mm than the inner rim flange (8, 18).

2. Combination according to Claim 1, **characterized in that** the difference of the rim flange heights (h₁, h₂) is from 5.0 mm to 12.0 mm.

3. Combination according to Claim 1 or 2, **characterized in that** the difference of the rim flange heights (h₁, h₂) is from 8.0 mm to 10.0 mm.

4. Combination according to one of Claims 1 to 3, **characterized in that** the two rims (1, 11) have matching rim flange heights (h₁, h₂).

5. Combination according to one of Claims 1 to 4, **characterized in that** the two rims (1) are drop centre rims.

6. Combination according to one of Claims 1 to 5, **characterized in that**, apart from the rim flange with the greater height (h₂), the two rims (1) are drop centre rims specified in accordance with the ETRTO.

7. Combination according to one of Claims 1 to 4, **characterized in that** the two rims (11) are tapered bead seat rims.

8. Combination according to one of Claims 1 to 4 or 7, **characterized in that**, apart from the rim flange with the greater height (h₂), the two rims (11) are tapered bead seat rims specified in accordance with the ETRTO.

9. Utility vehicle (20) with a combination according to one or more of Claims 1 to 8.

10. Utility vehicle (20) according to Claim 9, **characterized in that** the two vehicle wheels are mounted on the axle (21, 22, 23) of the utility vehicle (20) in such a way that, in the travelling direction in the case of forward driving, the respective left-hand-side rim flange of the rim (1, 11) has the greater rim flange height (h₂).

11. Utility vehicle (20) according to Claim 9 or 10, **characterized in that** the vehicle wheel (h₂) has a rim (1, 11) on all the axles (21, 22, 23) in each case at the one same axle position (A_{L}, A_{R}) for all the axles, the inner rim flange (8, 18) of which rim (1, 11) has a greater rim flange height than the outer rim flange (3, 13), the vehicle wheel which is arranged at the other axle position having a rim (1, 11), the outer rim flange (3, 13) of which has a greater rim flange height (h₂) than the inner rim flange (8, 18).

12. Utility vehicle (20) according to one of Claims 9 to 11, **characterized in that** the difference of the rim flange heights (h₁, h₂) of the rim flanges of the rims (1, 11) of the vehicle wheels which are arranged on one axle (21, 22, 23) is from 5.0 mm to 12.0 mm.

13. Utility vehicle (20) according to one of Claims 9 to 12, **characterized in that** the difference of the rim flange heights (h₁, h₂) of the rim flanges of the rims (1, 11) of the vehicle wheels which are arranged on one axle (21, 22, 23) is from 8.0 mm to 10.0 mm.

14. Utility vehicle (20) according to one of Claims 9 to 13, **characterized in that** the vehicle wheels which are mounted on one axle (21, 22, 23) have rims (1, 11), the rim flanges of which have matching rim flange heights (h₁, h₂).

15. Utility vehicle (20) according to one of Claims 9 to 14, **characterized in that** the vehicle wheels which are mounted on one axle (21, 22, 23) have rims (1, 11) which are drop centre rims.

16. Utility vehicle (20) according to one of Claims 9 to 15, **characterized in that** the vehicle wheels which are mounted on one axle (21, 22, 23) have rims (1, 11) which, apart from the rim flange with the greater height (h₂), are drop centre rims specified in accordance with the ETRTO.

17. Utility vehicle (20) according to one of Claims 9 to 14, **characterized in that** the vehicle wheels which are mounted on one axle (21, 22, 23) have rims (11) which are tapered bead seat rims.

18. Utility vehicle (20) according to one of Claims 9 to 14 or 17, **characterized in that** the vehicle wheels which are mounted on one axle (21, 22, 23) have rims (11) which, apart from the rim flange with the greater height (h₁, h₂), are tapered bead seat rims specified in accordance with the ETRTO.

## Revendications

1. Combinaison de deux roues de véhicule du même type avec des pneus de véhicule utilitaire montés pour le montage sur les positions d'essieu (A_{L}, A_{R}) d'un essieu (21, 22, 23) d'un véhicule utilitaire (20), chaque roue de véhicule présentant une jante (1, 11) et un disque de roue (2, 12) relié à la jante (1, 11), chaque jante (1, 11) présentant un épaulement de jante (4, 7 ; 14, 17) extérieur du côté extérieur de la roue et intérieur du côté intérieur de la roue, ainsi qu'un rebord de jante (3, 8 ; 13, 18) extérieur du côté extérieur de la roue et intérieur du côté intérieur de la roue,
sur la jante (1, 11) de l'une des roues de véhicule, le rebord de jante intérieur (8, 18) présentant une hauteur de rebord de jante (h₂) supérieure de 5,0 mm à 20,0 mm à celle du rebord de jante extérieur (3, 13) ; sur la jante (1, 11) de la deuxième roue de véhicule, le rebord de jante extérieur (3, 13) présentant une hauteur de rebord de jante (h₂) supérieure de 5,0 mm à 20,0 mm à celle du rebord de jante intérieur (8, 18).

2. Combinaison selon la revendication 1, **caractérisée en ce que** la différence des hauteurs de rebord de jante (h₁, h₂) est de 5,0 mm à 12,0 mm.

3. Combinaison selon la revendication 1 ou 2, **caractérisée en ce que** la différence des hauteurs de rebord de jante (h₁, h₂) est de 8,0 mm à 10,0 mm.

4. Combinaison selon l'une quelconque des revendications 1 à 3, **caractérisée en ce que** les deux jantes (1, 11) présentent des hauteurs de rebord de jante (h₁, h₂) qui coïncident.

5. Combinaison selon l'une quelconque des revendications 1 à 4, **caractérisée en ce que** les deux jantes (1) sont des jantes à épaulement raide.

6. Combinaison selon l'une quelconque des revendications 1 à 5, **caractérisée en ce que** les deux jantes (1), à l'exception du rebord de jante ayant la plus grande hauteur (h₂), sont des jantes à épaulement raide spécifiées conformément à l'ETRTO.

7. Combinaison selon l'une quelconque des revendications 1 à 4, **caractérisée en ce que** les deux jantes (11) sont des jantes à épaulement oblique.

8. Combinaison selon l'une quelconque des revendications 1 à 4 ou 7, **caractérisée en ce que** les deux jantes (11), à l'exception du rebord de jante ayant la plus grande hauteur (h₂), sont des jantes à épaulement oblique spécifiées conformément à l'ETRTO.

9. Véhicule utilitaire (20) comprenant une combinaison selon une ou plusieurs des revendications 1 à 8.

10. Véhicule utilitaire (20) selon la revendication 9, **caractérisé en ce que** les deux roues de véhicule sont montées sur l'essieu (21, 22, 23) du véhicule utilitaire (20) de telle sorte que, dans le sens de la marche en marche avant, le rebord de jante de la jante (1, 11) se trouvant respectivement à gauche présente la plus grande hauteur de rebord de jante (h₂).

11. Véhicule utilitaire (20) selon la revendication 9 ou 10, **caractérisé en ce que** sur tous les essieux (21, 22, 23), à une position d'essieu (A_{L}, A_{R}) identique pour tous les essieux, la roue de véhicule (h₂) présente une jante (1, 11) dont le rebord de jante intérieur (8, 18) présente une hauteur de rebord de jante supérieure à celle du rebord de jante extérieur (3, 13), la roue de véhicule agencée à l'autre position d'essieu présentant une jante (1, 11) dont le rebord de jante extérieur (3, 13) présente une hauteur de rebord de jante (h₂) supérieure à celle du rebord de jante intérieur (8, 18).

12. Véhicule utilitaire (20) selon l'une quelconque des revendications 9 à 11, **caractérisé en ce que** la différence des hauteurs de rebord de jante (h₁, h₂) des rebords de jante des jantes (1, 11) des roues de véhicule agencées sur un essieu (21, 22, 23) est de 5,0 mm à 12,0 mm.

13. Véhicule utilitaire (20) selon l'une quelconque des revendications 9 à 12, **caractérisé en ce que** la différence des hauteurs de rebord de jante (h₁, h₂) des rebords de jante des jantes (1, 11) des roues de véhicule agencées sur un essieu (21, 22, 23) est de 8,0 mm à 10,0 mm.

14. Véhicule utilitaire (20) selon l'une quelconque des revendications 9 à 13, **caractérisé en ce que** les roues de véhicule montées sur un essieu (21, 22, 23) possèdent des jantes (1, 11) dont les rebords de jante présentent des hauteurs de rebord de jante (h₁, h₂) qui coïncident.

15. Véhicule utilitaire (20) selon l'une quelconque des revendications 9 à 14, **caractérisé en ce que** les roues de véhicule montées sur un essieu (21, 22, 23) possèdent des jantes (1, 11) qui sont des jantes à épaulement raide.

16. Véhicule utilitaire (20) selon l'une quelconque des revendications 9 à 15, **caractérisé en ce que** les roues de véhicule montées sur un essieu (21, 22, 23) possèdent des jantes (1, 11) qui, à l'exception du rebord de jante ayant la plus grande hauteur (h₂), sont des jantes à épaulement raide spécifiées conformément à l'ETRTO.

17. Véhicule utilitaire (20) selon l'une quelconque des revendications 9 à 14, **caractérisé en ce que** les roues de véhicule montées sur un essieu (21, 22, 23) possèdent des jantes (11) qui sont des jantes à épaulement oblique.

18. Véhicule utilitaire (20) selon l'une quelconque des revendications 9 à 14 ou 17, **caractérisé en ce que** les roues de véhicule montées sur un essieu (21, 22, 23) possèdent des jantes (11) qui, à l'exception du rebord de jante ayant la plus grande hauteur (h₁, h₂), sont des jantes à épaulement oblique spécifiées conformément à l'ETRTO.
